# EUROPEAN PATENT SPECIFICATION

(11) **EP 1 493 289 B1**
(45) Date of publication and mention of the grant of the patent: **09.06.2010**
(21) Application number: 03716918.2
(22) Date of filing: 27.03.2003
(51) Int. Cl.: H04W 8/26

(54) **SYSTEM AND METHOD FOR PUSHING DATA IN AN INTERNET PROTOCOL NETWORK ENVIRONMENT**
SYSTEM UND VERFAHREN ZUM PUSHEN VON DATEN IN EINER INTERNET-PROTOKOLL-NETZWERKUMGEBUNG
SYSTEME ET PROCEDE DESTINES A PLACER DES DONNEES DANS UN ENVIRONNEMENT RESEAU A PROTOCOLE INTERNET

(30) Priority: 08.04.2002 US 118837
(43) Date of publication of application: 05.01.2005
(73) Proprietor: Cisco Technology, Inc., San Jose, CA 95134-1706 (US)
(72) Inventor: BHALLA, Rajesh, Westmont, IL 60559 (US); PADALA, Sudhakar, R., San Jose, CA (US)
(74) Representative: Kazi, Ilya
(86) International application number: PCT/US2003/009769
(87) International publication number: WO 2003/088692

(56) References cited:
- WO-A-00/24209
- WO-A-01/10091
- WO-A-03/019973
- US-A1- 2002 138 622

## Description

### TECHNICAL FIELD OF THE INVENTION

This invention relates in general to the field of network communications and more particularly to a system and method for pushing data in an internet protocol network environment.

### BACKGROUND OF THE INVENTION

Network architectures may be configured in order to provide simple internet protocol (IP) and mobile IP-based packet services to any number of network components, such as a mobile station, for example. A mobile station is generally assigned an IP address that may be a static address or a dynamically assigned address from a pool of addresses. An end user of a mobile station may then register for services and roam within or beyond wireless boundaries while still maintaining the always-on and always-reachable service status. This mobility feature offers opportunities for entities to provide internet services, intranet services, or other various services to a mobile station. Such services require the capability for a network to "push" data to the mobile station. "Push" data refers to information that may be communicated by a server or a device to a mobile station, without requiring a pull command or a specific request generated by the mobile station.

The ability to push data in certain scenarios generally requires an accurate IP address for a corresponding mobile station. In the example in which an IP address is static, i.e. unchanging, the appropriate data may be pushed to a mobile station with relatively little difficulty. However, a problem exists in current network architectures that implement dynamic IP addressing resulting in servers or devices that are unable to determine a corresponding IP address for a mobile station.

A method for providing a service to a mobile terminal is disclosed in WO 00/24209. The method includes allocating an identifier and a PDP address to the mobile station. The PDP address is stored in an intelligent network node and is used for routing the new service to the mobile terminal.

### SUMMARY OF THE INVENTION

Aspects of the invention are set out in the independent claims. Certain preferred features are set out in the dependent claims.

From the foregoing, it may be appreciated by those skilled in the art that a need has arisen for an improved pushing capability for data communicated in an internet protocol (IP) network environment. In accordance with one embodiment of the present invention, a system and method for pushing data in an IP network environment is provided that includes assigning a network identifier to an end user of a mobile station. A relationship is determined between the network identifier and an IP address element, the relationship being stored in a database. A query is received for the network identifier for the end user and, in response to the query, the IP address element is provided such that a querying entity may push data to the mobile station.

In accordance with another embodiment of the present invention, a method for pushing data in an IP network environment is provided that includes querying a database for a network identifier, the network identifier being associated with an IP address element of an end user of a mobile station. The method also includes receiving the IP address element from the database and using the IP address element to push data to the end user of the mobile station.

Certain embodiments of the present invention may provide a number of technical advantages. For example, according to one embodiment of the present invention, a data communications approach is provided that allows an entity to accurately push data to an end user by correlating an end user's identification with an IP address. Once the identity or the IP addressing information of an end user is known, an entity may push data to a mobile station irrespective of the end user's location or status in the network. Additionally, the pushing of data to an end user may be accomplished without burdening the mobile station or interfering with other network communications. Embodiments of the present invention may enjoy some, all, or none of these advantages. Other technical advantages may be readily apparent to those skilled in the art from the following figures, description, and claims.

### BRIEF DESCRIPTION OF THE DRAWINGS

To provide a more complete understanding of the present invention and features and advantages thereof, reference is made to the following description, taken in conjunction with the accompanying figures, wherein like reference numerals represent like parts, in which:
FIGURE 1 is a simplified block diagram of a communication system for enabling data to be pushed in an internet protocol (IP) network;
FIGURE 2 is a block diagram of one embodiment of the communication system that provides simple IP-based services to a mobile station;
FIGURE 3 is a block diagram of one embodiment of the communication system that provides mobile IP-based services to a mobile station;
FIGURE 4 is a flow diagram illustrating a virtual private network (VPN) user registering in a communication system after roaming into a foreign location;
FIGURE 5 is a flow diagram illustrating how an application server retrieves information from a domain name system (DNS) in order to push data in a communication system;
FIGURE 6 is a flow diagram alternatively illustrating an example flow embodiment for registering mobile IP services by an end user of a mobile station; and
FIGURE 7 is a flow diagram alternatively illustrating an example flow embodiment for providing mobile-IP services to an end user of a mobile station.

### DETAILED DESCRIPTION OF THE INVENTION

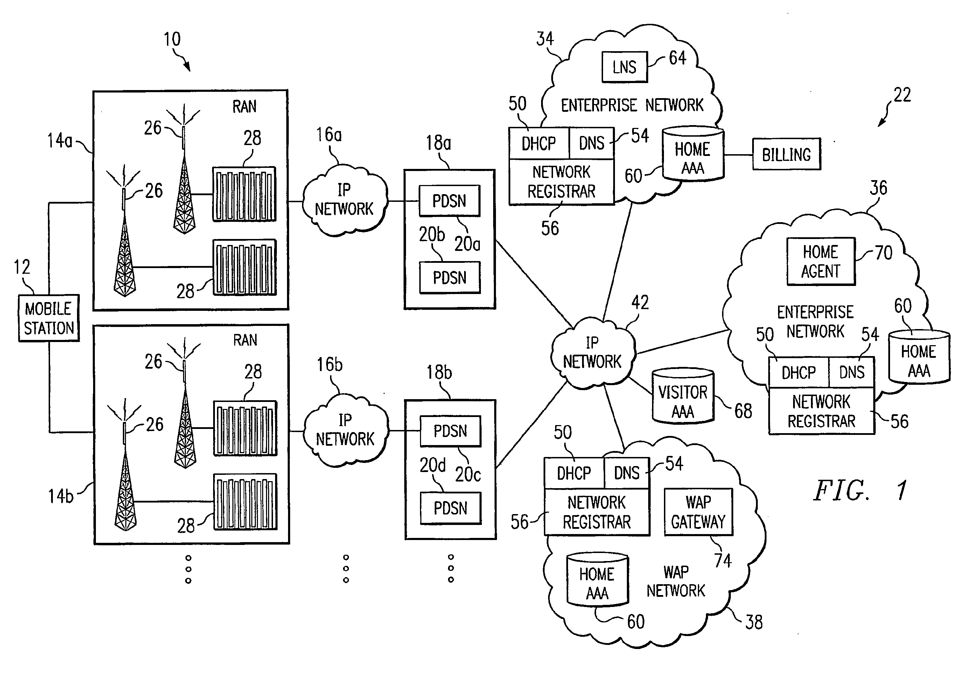

FIGURE 1 is a simplified block diagram of a communication system 10 for enabling data to be pushed in an internet protocol (IP) network in accordance with one embodiment of the present invention. Communication system 10 includes a mobile station 12, multiple radio access networks (RANs) 14a and 14b, multiple IP networks 16a and 16b, multiple packet data serving node (PDSN) clusters 18a and 18b, and an IP communications network block 22 with a series of sub-networks. The elements within communication system 10 cooperate in order to push data from selected sub-networks of IP communications network block 22 to mobile station 12. In addition, the sub-networks may operate to provide updated IP addressing information and other associated parameters for communicating data accurately to an end user of mobile station 12.

Mobile station 12 is a communications interface between an end user and multiple IP networks 16a and 16b. Mobile station 12 may be a cellular (or wireless) telephone, a computer, a personal digital assistant (PDA), a laptop or electronic notebook, or any other device, component, or object capable of initiating voice or data exchanges within communication system 10. In addition to executing radio or processing functions to access IP network 16a or 16b through a radio interface, mobile station 12 may also provide an interface to the human user, such as via a microphone, a display, a keyboard, or other terminal equipment (such as an interface to a personal computer or to a facsimile machine in cases where mobile station 12 is used as a modem for example, etc.). An end user as referred to in this document generally represents a person wishing to initiate a data exchange within communication system 10. However, the end user may alternatively be a cellular component, a computer, a program, a database, or any other device, element, or object capable of initiating a voice or a data exchange within communication system 10. Mobile station 12 is coupled to one or more RANs 14a and 14b.

RANs 14a and 14b each comprise a base transceiver station 26 and a base station 28. RANs 14a and 14b offer an interface between mobile station 12 and IP networks 16a and 16b. This interface allows data to be exchanged between mobile station 12 and any number of selected elements within communication system 10. Data, as used herein in this document, refers to any type of numeric, voice, or script data, or any other suitable information in any appropriate format that may be communicated from one point to another.

Base transceiver station 26 may include radio transmission/reception devices, components or objects, and antennas. Base transceiver station 26 may operate as a series of complex radio modems and may assist in performing suitable networking tasks. Base transceiver station 26 may also perform transcoding and rate adaptation functions where appropriate. Base transceiver station 26 may be coupled to a base station controller that uses a land line (such as a high speed T1/E1, for example) interface. Base station controller may also be provided within RANs 14a and 14b to operate as a management component for a radio interface. This management capability may be accomplished through remote commands to base transceiver station 26.

In operation, base transceiver stations 26 provide transmit and receive interface links for communication system 10. One or more base transceiver stations 26 receive information from mobile station 12 in the form of data packets and communicate the data packets or information to corresponding base station controllers. Base station controllers work in conjunction with base transceiver stations 26 to provide a link or interface between mobile station 12 and multiple IP networks 16a and 16b. Base station controllers may then communicate data packets or information received from base transceiver station 26 to a corresponding data network component within communication system 10.

Base station 28 represents a radio transmission and reception station for handling communications traffic. Base station 28 may also be identified as a cell site, primarily so because it may hold one or more transmit/receive cells. One or more base stations 28 may comprise one or more receive/transmit antennas, a base station controller, a microwave dish, and suitable associated electronic circuitry.

IP networks 16a and 16b each represent a series of points or nodes of interconnected communication paths for receiving and transmitting packets of information that propagate through communication system 10. IP networks 16a and 16b offer a communications interface between RANs 14a and 14b and PDSN clusters 18a and 18b respectively. IP networks 16a and 16b may be any local area network (LAN), metropolitan area network (MAN), or wide area network (WAN), or any other appropriate architecture or system that facilitates communications in a network environment. IP networks 16a and 16b implement a TCP/IP communication language protocol in a particular embodiment of the present invention. However, IP networks 16a and 16b may alternatively implement any other suitable communication protocol for transmitting and receiving data packets within communication system 10.

PDSN clusters 18a and 18b each comprise one or more PDSN communications elements 20a, 20b, 20c, and 20d that provide access to the Internet, intranets, wireless application protocol (WAP) servers, or any other suitable platform, element, or network for communication with mobile station 12. PDSN clusters 18a and 18b may each provide (via PDSN communications elements 20a through 20d) an access gateway for both mobile station 12 and IP networks 16a and 16b. PDSN clusters 18a and 18b may also provide a communications node between IP networks 16a and 16b (and further to mobile station 12) and the elements within IP communications network block 22. PDSN clusters 18a and 18b may also provide foreign agent support and packet transport for virtual private networking (both of which are discussed in greater detail below) or for any other suitable networking configuration where appropriate. Additionally, PDSN clusters 18a and 18b may operate to authenticate, authorize, and provide an accounting functionality for information propagating through communication system 10.

In another embodiment of the present invention, PDSN clusters 18a and 18b may be serving general packet radio service (GPRS) support nodes (SGSN), providing a communications medium in a GPRS service network environment. Where communication system 10 is implemented in a GPRS environment, a series of IP network gateways may be provided, each of which may include a gateway GPRS support node (GGSN) that works in conjunction with the SGSNs in communicating high-speed data exchanges within communication system 10.

GPRS represents a packet-based data bearer service for communication services that may be delivered as a network overlay for any type of suitable network configuration or platform. GPRS generally applies packet-radio and packet switching principles to transfer data packets in an efficient way between global system for mobile communications (GSM) mobile stations and external packet data networks. Packet switching occurs when data is split into packets that are transmitted separately and then reassembled at a receiving end. GPRS may support multiple internet communication protocols, and may enable existing IP, X.25, or any other suitable applications or protocols to operate over GSM connections.

IP communications network block 22 includes a serving IP network 42 with a series of sub-networks, such as an enterprise network 34, an enterprise network 36, and a WAP network 38. These sub-networks (enterprise networks 34 and 36 and WAP network 38) cooperate with IP network 42 to retrieve accurate IP addressing information that identifies an end user in order to push data through PDSN clusters 18a and 18b and on to mobile station 12. Additionally, IP communications network block 22 operates generally to address the mobility features of mobile station 12 in providing consistent and accurate data flows that are pushed to mobile station 12.

IP network 42 represents a series of points or nodes of interconnected communication paths for receiving and transmitting packets of information that propagate through communication system 10. IP network 42 provides an interface between any selected one of enterprise network 34, enterprise network 36, and WAP network 38, and any selected one of PDSN clusters 18a and 18b and RANs 14a and 14b. IP network 42 may be any LAN, MAN, WAN, or any other appropriate architecture or system that facilitates communications in a network environment. IP network 42 may implement a TCP/IP communication language protocol or any other suitable communication protocol for transmitting and receiving data packets within communication system 10. IP network 42 operates to receive data that may be pushed from enterprise networks 34 and 36 and WAP network 38 to PDSN clusters 18a and 18b. The data or information may then be communicated or otherwise relayed to mobile station 12.

For purposes of teaching the present invention, it is useful to explain the type of data that is sought to be communicated to mobile station 12 by any one of the sub-networks (enterprise networks 34 and 36 and WAP network 38) within IP communications network block 22. There are generally two types of services that may be offered or otherwise provided to mobile station 12 by some entity, such as by a wireless service provider for example. The first type of data communication relates to a "pull" request. A pull request generally originates from a user that requests information from a database or from some server or from any other device or component operable to provide information to an end user of mobile station 12. In response to this request, the appropriate application server or element communicates some data to the end user of mobile station 12. For example, an end user of mobile station 12 may log onto a web site in order to retrieve some data or to access some piece of information.

A second type of data communication relates to a push request or a push command, instruction, or action. Application servers or application elements may push data down to an end user of mobile station 12 independently, i.e. generally unsolicited by the end user. This could be in the form of stock quotes, for example, where a user has previously subscribed to such types of financial information but didn't necessarily specify a request for that information at the time it was received. Alternatively, such a push data communication could be any type of information that is communicated to an end user of mobile station 12. Push data communication may also relate to location-based services that are pushed to an end user of mobile station 12. For example, an end user who roams into a new or foreign area may trigger an application element or device to send some information to mobile station 12 relating to the new location, such as a listing of restaurants, local lodging, or car-rental services in the area. The application server, in sending data to an end user of mobile station 12, may be triggered by any number of parameters or variables, such as the time of day or the occurrence of some event.

In the case of pull-type data communications, an IP address of an associated end user of mobile station 12 that requested the data or information may be appropriately identified in order to send or push data to an end user. However, in the case of push-type data communications, devices or elements (such as application servers, for example), which attempt to push data to an end user of mobile station 12, may have no knowledge of the appropriate IP address of the end user at the time in which data is sought to be pushed. Where an IP address of an end user of mobile station 12 is static (i.e. unchanged), this lack of knowledge associated with the IP address is not an issue because mobile station 12 is assigned an IP address that is constant and an application element or device may use that IP address in pushing data to mobile station 12. However, when dynamic (i.e. changing) IP addressing is implemented, the varying IP addressing of mobile station 12 may preclude an application element or device from accurately pushing data to mobile station 12, as the application element or device lacks the requisite knowledge to push the data properly. The ability to accurately push data in a network environment is addressed herein according to the teachings of the present invention.

Referring back to IP communications network block 22, enterprise networks 34 and 36 and WAP network 38 generally represent home domains for an end user of mobile station 12. An end user of mobile station 12 may be generally homed in a particular domain that provides registration, billing, and other suitable services to the end user. Home domains could be entities such as Verizon, Sprint, AT&T, and other service providers that offer such services to one or more end users of mobile station 12. These home domains may also represent corporate domain environments, such as Cisco.com, Intel.com, or IBM.com, for example, which may include an internal domain for end users of one or more mobile stations 12 to register. Such home domains may be private or public, secure or unsecured, and may generally provide a location for data communications, storage, or retrieval.

Each of the sub-networks illustrated in IP communications network block 22 may also store user profiles and associated information of end users of mobile stations 12. In addition, each of the sub-networks may choose to provide different or combinational services to mobile station 12. For example, simple IP services or mobile IP services, or any combination thereof, may be provided to an end user of mobile station 12 by any one of enterprise networks 34 and 36, and WAP network 38. These services may, in certain instances, be dependent on the capabilities of mobile station 12.

Each of the sub-networks illustrated in IP communications network block 22 comprise a dynamic host configuration protocol server (DHCP) 50, a domain name system (DNS) database element 54, and a network registrar 56 that cooperate in order to address the dynamic addressing feature described above. In addition, enterprise networks 34 and 36, and WAP network 38 each include a home authentication, authorization, and accounting (AAA) server 60 that manages end user requests for access to computer resources and that provides authentication, authorization, and accounting services for a corresponding network or for an end user of mobile station 12.

In accordance with the teachings of the present invention, one or more end users of one or more mobile stations 12 is assigned a network access identifier (NAI). DHCP server 50, DNS database element 54, and network registrar 56 operate to maintain a relationship in a database configuration that is constantly updated in which an NAI is associated with an IP address and/or other suitable parameters and identifies an end user of mobile station 12. In the case where an IP address or any other associated parameter changes, the changed information may be updated accordingly in DNS database element 54. DNS database element 54 also allows an application server or device to direct a query to the database (in the appropriate domain) and to retrieve a specific IP address or specific end user information or parameters that are allocated to the NAI associated with an end user of mobile station 12. After obtaining the particular address, information, or parameter, the application server or device may then properly push data to an end user of mobile station 12.

DHCP server 50 is a communications element that coordinates a communications session for mobile station 12 within communication system 10. DHCP server 50 receives a request to initiate a communications session, assigns a new address for a specific time period (commonly referred to as a lease period), and sends the new address to the requesting element together with the other required configuration information. When a requesting element, such as an end user of mobile station 12, needs to launch TCP/IP operations, it communicates a request for addressing information. Once the new address is assigned and the other required configuration information is received, this information is acknowledged by the end user and used to set up its corresponding configuration.

The DHCP protocol represents a platform that lets an operator, such as a network administrator for example, to centrally manage (and automate where appropriate) the assignment of IP addressing configurations within a network. Without the DHCP configuration, an IP address must be entered manually at each entity or system wishing to communicate in a network environment. DHCP also allows a network administrator to supervise and to distribute IP addresses from a central point. In a particular embodiment, DHCP server 50 provides the automatic (dynamic) allocation of IP client configurations for a predetermined period. DHCP server 50 generally does not reallocate the address during the lease period and may attempt to return the same address every time an end user requests an IP address. Additionally, DHCP server 50 may extend this period for the end user with subsequent requests, and may also send a message to a corresponding server before the time period expires, communicating that it no longer needs the address and thus the address may be released and assigned to another end user or client within the network.

DNS database element 54 operates to store an element that associates an NAI with an IP address or other suitable information of an end user of mobile station 12 according to one embodiment of the present invention. Alternatively, DNS database element 54 may store any identification tool, component, object, or element that operates to correlate, recognize, or otherwise associate an end user of mobile station 12 with some unique network identity for communicating data. DNS database element 54 may be updated periodically or in any suitable manner in order to reflect the current or otherwise the accurate IP address and corresponding additional information of an end user of mobile station 12. DNS database element 54 may be in constant communication with DHCP server 50 and network registrar 56 and be accessed, where appropriate, by IP network 42 in order to retrieve, or otherwise to identify, an IP address or other associated information for an end user. DNS database element 54 may provide not only accurate IP addressing information but other information or parameters of an end user of mobile station 12, for example, such as accounting, billing, priority, or how long the IP address will be available.

Accessing DNS database element 54 may be generally domain-dependent in a particular embodiment of the present invention. An application device or element or other communications interface sends communications through the home domain in order to access or to retrieve the corresponding IP address or other suitable information of an end user. Mobile station 12 may be continuously registering with any one or more of the sub-networks within IP communications network block 22 depending on its respective location or on any other suitable triggering event. Additionally, this IP address or other suitable information may be constantly updated in DNS database element 54 over some period of time, or on power up and power down of mobile station 12, or upon the occurrence of any suitable action or event. DNS database element 54 may be generally positioned at each respective home server in corresponding sub-networks (enterprise network 34, enterprise network 36, and WAP network 38).

Network registrar 56 manages IP addresses from DHCP server 50 on the basis of the NAIs of end users of one or more mobile stations 12. Network registrar 56 may then securely update the end users DNS entries with the assigned address and possibly other service parameters. Such dynamic DNS capabilities may be based on appropriate procedures, for example, such as suitable RFC2136-compliant processes. Whenever an end user of mobile station 12 is assigned or leased an IP address, the corresponding DNS entry may be updated in DNS database element 54 to reflect the new address along with the corresponding lease information. Periodic refreshes are also enabled in order to permit DNS registrations to expire in the case of lost user connections or mobile station 12 disconnecting service without notification.

Network registrar 56 may assist in automating tasks such as user identity based IP address management and maintenance of such addressing pools. Network registrar 56 may also provide an interface with the directory servers and further facilitate the integration of DNS database element 54 and DHCP server 50 services with other network management applications. Network registrar 56 may also allow DHCP server 50 to read client provisioning information from DNS database element 54 and to write IP address information dynamically to DNS database element 54.

Home AAA server 60 is a server program that handles end user requests for access to computer resources. For a corresponding network, home AAA 60 also provides authentication, authorization, and accounting services and management. Authorization generally refers to the process of giving an end user permission to do or to access something. In multi-user computer systems, a system administrator may define for the system which end users are allowed access to given locations in the system and further what privileges for an end user are provided. Once an end user has logged into a sub-network, such as enterprise network 34, the sub-network may wish to identify what resources the end user is given during the communication session. Thus, authorization within communication system 10 may be seen as both a preliminary setting up of permissions by a system administrator and the actual checking or verification of the permission values that have been set up when an end user of mobile station 12 is attempting access. Authentication generally refers to the process of determining whether an end user is in fact who or what it is declared to be. In the case of private or public computer networks, authentication may be commonly done, for example, through the use of unique identification elements (such as an NAI) or log-on passwords. Knowledge of the password offers a presumption that the end user is authentic. Accounting generally refers to financial information associated with each end user, or each network, and may additionally include trafficking information or data relating to other information flows within communication system 10 or within a particular sub-network.

IP communications network block 22 may also include a visitor AAA 68. Visitor AAA 68 may be positioned proximate to enterprise networks 34 and 36 or proximate to PDSN communications element 20a or alternatively positioned in any other suitable location such that IP network 42 may communicate with visitor AAA 68. Visitor AAA 68 is similar to home AAA server 60, but alternatively provides an element for handling end user requests for a visited domain, i.e., a domain outside an end user's home domain. A local PDSN element may be in constant communication with visitor AAA 68 such that visitor AAA 68 may route or otherwise proxy information to the home domain (potentially based on the domain information as provided in the end user's NAI).

In operation, when an end user of mobile station 12 first registers for packet data services, it establishes a point to point protocol (PPP) connection with a PDSN element within PDSN clusters 18a or 18b. The PDSN element may then authenticate the end user of mobile station 12 by communicating with visitor AAA 68 in the visited network, which in turn may communicate with home AAA server 60 in the end user's home network. After successful authentication, mobile station 12 and the PDSN element establish a PPP connection. For simple IP services, the home network is responsible for user authentication and IP address allocation. The end user is assigned an IP address on successful PPP authentication. If so authorized and provisioned, the corresponding PDSN may then establish a layer two tunneling protocol (L2TP) tunnel in the home network.

IP communications network block 22 may additionally comprise a layer to tunneling protocol network server (LNS) 64, which may be provided to address secure services provided to an end user of mobile station 12. In a particular embodiment, LNS 64 offers L2TP secure services within communication system 10. In such a case, a corresponding local access concentrator (LAC) element may be provided in any one or more of PDSN communications elements 20a through 20d within PDSN clusters 18a or 18b. If an end user travels to a new domain or a visited domain, it may first contact a PDSN element in the visited domain. That PDSN may then communicate, via visitor AAA 68, with home AAA 60 and accordingly authorize the end user. If the end user of mobile station 12 is appropriately authorized, home AAA 60 may then communicate data back to the visited PDSN. The visited PDSN may invoke the LAC element and establish a tunnel to LNS 64 and the end user's home domain. With the appropriate tunneling provided, the information exchange between mobile station 12 and the device or element which holds the data to be pushed to mobile station 12 may take place through the secure tunneling.

IP communications network block 22 may also include a home agent 70. Home agent 70 may be provisioned in enterprise network 36. However, home agent 70 may alternatively be positioned in any other suitable location where appropriate and according to particular needs. Home agent 70 cooperates with DHCP server 50 during mobile IP registration in order to assign an IP address to mobile station 12. User authentication and IP address allocation may be performed during mobile IP registration with home agent 70 (this is in contrast to the PPP establishment phase for a simple IP service scenario). On authentication, an end user may be assigned an IP address by home agent 70 and network registrar 56. The assigned IP address is returned to the end user with the mobile IP registration reply. The assigned IP address may be a private or a routable IP address. DHCP server 50 may then update DNS database element 54 before returning the IP address and other provisioned parameters to an end user of mobile station 12. A mobile IP tunnel may be established between PDSN cluster 18a and home agent 70 via IP network 42 to enable secure end-to-end packet transport.

In operation, where mobile IP services are being offered to an end user, a home network may perform user authentication and IP address allocation. User authentication and IP address allocation are performed during mobile IP registration with home agent 70. Mobile IP enables a host to be identified by a single IP address even while mobile station 12 physically moves its point of attachment from one network to another. This feature allows transparent forwarding of data packets to an end user of mobile station 12. Movement from one point of attachment to another is seamlessly achieved without requiring the intervention of an end user of mobile station 12. Thus, mobile IP servicing in the context of communication system 10 provides ubiquitous connectivity for users irrespective of their presence in their respective home enterprise networks. For end users not capable of mobile IP access, such ubiquitous connectivity may still be achieved by the use of network registrar 56 operating in conjunction with DHCP server 50 and DNS database element 54.

In operation, enterprise network 34 provides for a scenario in which an end user roams into a visited or foreign domain and triggers or otherwise contacts a corresponding server in the visited domain. The visited domain server may then authenticate the end user with the home domain via home AAA 60. After authentication, parameters may be exchanged between the home domain and visited domain. These parameters may set up general data exchanges or secure exchanges where appropriate. LNS 64 is provided to address secure services provided to an end user of mobile station 12. In a particular embodiment, LNS 64 offers L2TP secure services within communication system 10. In such a case, the corresponding LAC element may be provided within PDSN clusters 18a or 18b. Where an end user travels to a new domain or a visited domain, it first contacts the PDSN in the visited domain, which communicates (via visitor AAA 68) with home AAA 60, and authorizes the end user. After the end user is appropriately authorized, home AAA 60 may then communicate data back to the visited PDSN. The visited PDSN may then invoke the LAC element and establish a tunnel to LNS 64 and the end user's home domain. With the appropriate tunneling provided, the information exchange between mobile station 12 and the device or element that holds the data to be pushed to mobile station 12 may take place through the secure tunneling.

In operation, enterprise network 36 represents a sub-network that implements simple IP-type services for an end user of mobile station 12. In the case where a particular home domain offers both mobile IP services and secure services, enterprise network 36 is provided with LNS 64 and home agent 70. Once mobile station 12 is identified, home agent 70 or LNS 64 is invoked. Enterprise network 36 represents a sub-network that generally does not implement mobile IP services nor does it require a specific type of tunneling for secure communications. Thus, enterprise network 36 is similar to enterprise network 34 with a provision for home agent 70 and the elimination of LNS 64.

In operation, WAP network 38 represents a configuration in which application-type services, or any other type of service that a user may be subscribed to or potentially susceptible to receiving, are available for mobile station 12. An example type of application services is based on WAP. However, WAP network 38 may alternatively be based on any other type of suitable protocol where appropriate. WAP network 38 could be a service provider, such as Yahoo.com for example, or any other entity or domain that provides services to end users. WAP network 38 may also represent another location server in accordance with the teachings of the present invention. Once the location of an end user of mobile station 12 is determined, the application server may determine what information to push down to the end user. Such information may be location-based data or any other type of information that an end user may receive. WAP network 38 includes DNS database element 54, network registrar 56, and DHCP server 50, which provide dynamic IP addressing and updated information for pushing data to an end user of mobile station 12.

WAP network 38 may also comprise a WAP gateway 74. WAP gateway 74 is a communications interface operable to provide for the exchange of data within WAP network 38. WAP gateway 74 may operate in various network architectures in which gateways provide functions, for example, such as call control, bearer transport, or voice exchange.

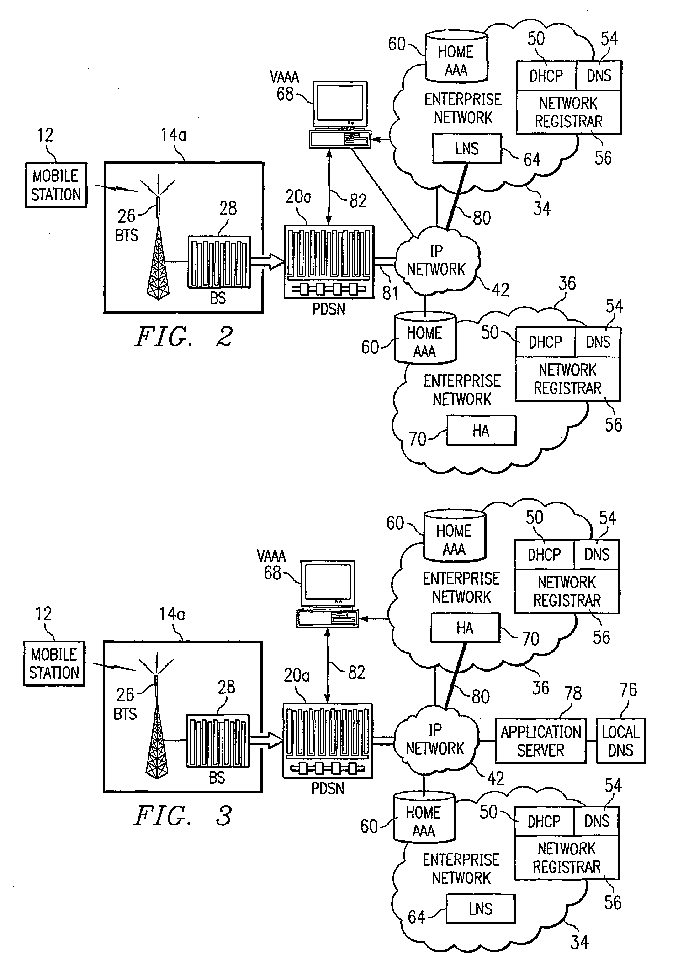

FIGURE 2 is a block diagram of one embodiment of communication system 10 in which simple IP-based services are provided to mobile station 12. Generally in a wireless domain environment, there are different ways in which services are provided to an end user of mobile station 12. These services may be dependent on the capability of mobile station 12 or on the capability of an associated network. One type of service, a simple IP-based service, may be implemented in a virtual private network (VPN) environment. Enterprise networks 34 and 36 may operate in conjunction with IP network 42 in order to provide simple IP-based services to an end user of mobile station 12. Data is pushed to an end user after mobile station 12 is configured to invoke simple IP services based on VPN network protocols.

A communications link 80 is provided between IP network 42 and LNS 64 in order to illustrate the L2TP tunnel that may be established between LNS 64 and IP network 42 (and additionally between IP network 42 and PDSN communications element 20a as illustrated by a communications link 81). In addition, a logical communications link 82 is provided between visitor AAA 68 and PDSN communications element 20a. Communications link 82 illustrates a logical communication pathway. Communications between visitor AAA 68 and PDSN communications element 20a generally propagate through IP network 42.

In operation, push services may be enabled in the sub-networks by provisioning respective network registrars 56 for managing the corporate or company IP address pools. A simple IP service based end user of mobile station 12 may initiate a registration for services by establishing a PPP connection with PDSN communications element 20a. PPP may represent a direct connection to an internet or an intranet over a telephone line with a modem. On authentication and authorization at the corporate network, and if the user is authorized for secure layer two access services, appropriate authorization and tunneling parameters are returned to PDSN communications element 20a. PDSN communications element 20a then establishes a L2TP tunnel with LNS 64 in the corporate network. The PPP connection is then established between mobile station 12 and LNS 64 and an IP address is assigned by network registrar 56.

Home AAA 60 receives the IP address and other parameters from DHCP server 50 and DNS database element 54 in order to direct data to be pushed to mobile station 12 with dynamic DNS updating occurring simultaneously. Authorization and IP address management may be retrieved by home AAA 60 from LNS 64. The assigned IP address may be a private or a routable IP address. On assignment of the IP address, DHCP server 50 may perform DNS update procedures for updating the assigned IP address and leasing parameters for the end user of mobile station 12 in DNA database element 54.

FIGURE 3 is a block diagram of one embodiment of communication system 10 in which mobile IP-based services are provided to mobile station 12. FIGURE 3 is similar to FIGURE 2 but illustrates push data services enabled for a mobile IP service-based end user of mobile station 12 as opposed to a single IP service-based end user. The mobile IP services may be provided to mobile station 12 by provisioning network registrar 56 within enterprise network 36 for managing the IP address pools at home agent 70. A mobile IP service-based user may initiate registration for services by establishing a PPP connection with PDSN communications element 20a. An end user authentication is optional during the PPP establishment. An end user authentication and authorization is performed during mobile IP registration.

On authentication, the end user is assigned an IP address by home agent 70, which works in conjunction with network registrar 56 of enterprise network 36. The assigned IP address is returned to the end user with the mobile IP registration reply. The assigned IP address may be a private or a routable IP address. DHCP server 50 may perform DNS updating procedures for updating the assigned IP address and address leasing parameters for an end user of mobile station 12.

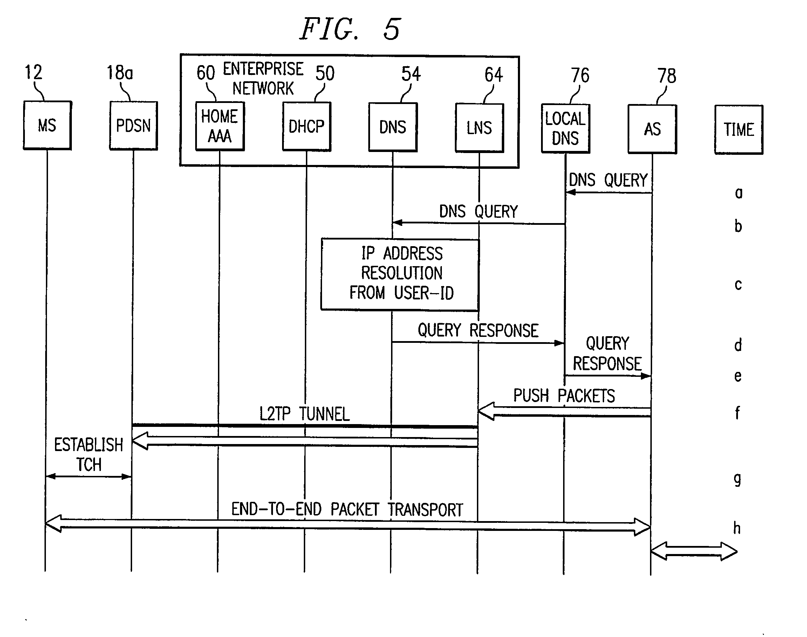

FIGURE 3 also illustrates the inclusion of an application element that retrieves information from DNS database element 54 using an application server 78 and a local DNS database 76. When application server 78 wishes to push data to mobile station 12, it may reference the NAI of mobile station 12, make the connection between the NAI and an end user's IP address, and push the data to the appropriate location. Application server 78 may be any element or device operable to communicate data to mobile station 12. Local DNS database 76 represents a DNS that is closest to mobile station 12 as mobile station 12 roams from area to area. Additional details of the operation of application server 78 and local DNS database 76 are described below with reference to FIGURE 5.

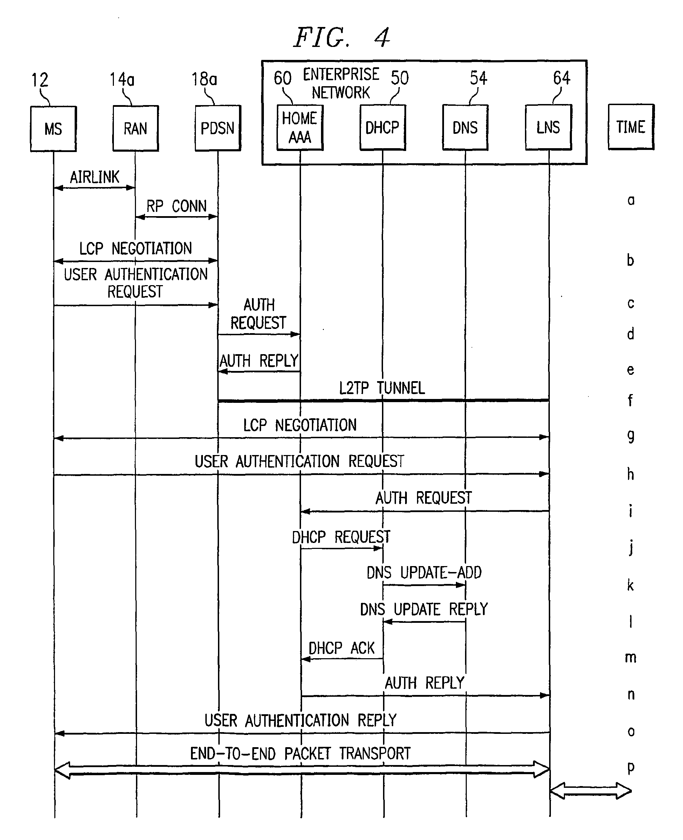

FIGURE 4 is a flow diagram illustrating a VPN user registering after roaming into a foreign location or visitor network. Specifically, registration for a VPN user and the updating of the corresponding information provided in DNS database element 54 is shown. A series of letters, 'a'-'p,' are provided to aid in describing a process flow for the illustrated embodiment. At step 'a', when a user first registers in a new domain, an airlink is established between mobile station 12 and RAN 14a. At step 'b' RAN 14a establishes a route processor (RP) connection with PDSN cluster 18a or 18b. At step 'c' the user authentication request is generated at mobile station 12 and communicated to PDSN cluster 18a. This communication may include additional information associated with the end user where appropriate and may be part of the PPP protocol generally.

An authentication request is forwarded from PDSN cluster 18a to home AAA 60 at step 'd'. At step 'e' an authentication reply is communicated from home AAA 60 to PDSN cluster 18a. The authentication reply contains authentication information and may additionally include how to set up a secure tunnel between a LAC element and LNS 64. This tunnel is illustrated in step 'f' by a thick line setting up an L2TP tunnel between PDSN cluster 18a and LNS 64. At step 'g' a link control protocol (LCP) negotiation occurs between mobile station 12 and LNS 64. At step 'h', mobile station 12 generates a user authentication request through LNS 64.

At step 'i', LNS 64 generates an authentication request to home AAA 60. At step 'j' home AAA 60 generates a DHCP request to DHCP server 50. DHCP server 50 sends a request to obtain the IP address and other information for an end user of mobile station 12. At step 'k', DHCP server 50 provides a DNS update or an add signal to DNS database element 54. DHCP server 50 may update whatever IP addresses have been allocated or alternatively update other information such as billing, accounting, priority, or any other parameters where appropriate. DNS database element 54 responds to the signal by replying with a DNS update at step '1'. At step 'm', DHCP server 50 generates a DHCP acknowledge signal to home AAA 60. At step 'n', home AAA 60 generates an authentication reply to LNS 64. LNS 64 may then generate a user authentication reply (step 'o') to mobile station 12. Step 'p' illustrates end-to-end packet transport between mobile station 12 and LNS 64.

Where simple IP services are provided to an end user, LNS 64 may be removed. In addition, in the case of simple IP services being provided to an end user, steps 'g'-'j' may also be removed. Step 'e' is also affected where simple IP services are provided and may be accordingly moved such that it replaces step 'n' (i.e. the authentication reply generated by home AAA 60 to PDSN cluster 18a in step 'e' is moved to replace step 'n' in which home AAA 60 generated an authentication reply to LNS 64). In addition, step 'o' may be truncated such that the user authentication reply is only passed between PDSN cluster 18a and mobile station 12. Following this connection, a corresponding connection is made between mobile station 12 and LNS 64.

FIGURE 5 is a flow diagram illustrating how an application element retrieves information from DNS database element 54 using application server 78 and local DNS database 76. When application server 78 wishes to push data to mobile station 12, it may reference the NAI of mobile station 12, make the connection between the NAI and an end user's IP address, and push the data to the appropriate location. Application server 78 may be any element or device operable to communicate data to mobile station 12. Local DNS database 76 represents a DNS that is closest to mobile station 12 as mobile station 12 roams from area to area.

At a first step 'a', application server 78 issues a DNS query to local DNS database 76. This query could be triggered by an event or by any other suitable signal provided by mobile station 12. At step 'b', local DNS database 76 uses the domain name in the NAI to forward or to proxy the request to DNS database element 54 in the home domain. At step 'c', IP address resolution from the end user ID occurs, i.e. DNS database element 54 is able to resolve the NAI to an IP address or to any other suitable information associated with an end user. At step 'd', DNS database element 54 issues a query response signal to local DNS database 76. At step 'e', local DNS database 76 forwards a query response signal to application server 78. Step 'f' illustrates application server 78 beginning to push packets to LNS 64, which may in turn establish a L2TP tunnel in PDSN cluster 18a.

Step 'g' is intended to illustrate the concept of dormancy generally. In wireless communications, because of the limited frequency ranges or bandwidth available, once mobile station 12 makes a connection to RAN 14a or 14b for obtaining services, the connection may be destroyed when information is not being pushed between the two elements. This could be based on some period of time of inactivity or on any other factor that contributes to a lack of information being passed between the two elements. The air channel is broken when there is such persistent dormancy. Step 'g' illustrates an established traffic channel between mobile station 12 and PDSN cluster 18a to address this dormancy concern in the context of a communications session involving mobile station 12. At step 'h', end-to-end packet transport may be achieved between mobile station 12 and application server 78.

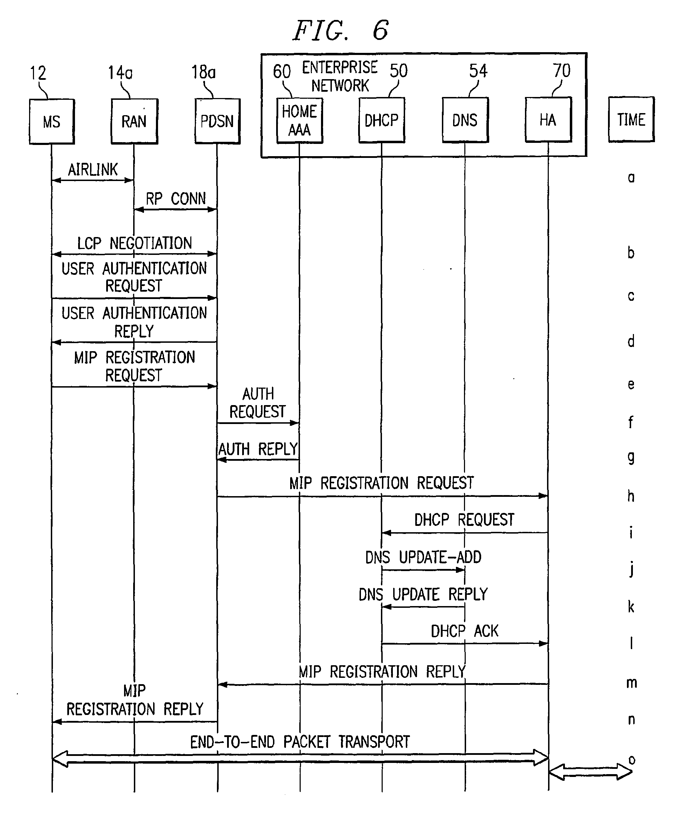

FIGURE 6 is a flow diagram alternatively illustrating an example flow embodiment for registering for mobile IP services for an end user of mobile station 12. Beginning at step 'a', an airlink is established between mobile station 12 and RAN 14a. At step 'b', RAN 14a communicates an RP connection to PDSN cluster 18a. At step 'c', LCP negotiations occur between mobile station 12 and PDSN cluster 18a. At step 'd', mobile station 12 initiates a user authentication request to PDSN cluster 18a. At step 'e', PDSN cluster 18a responds by issuing a user authentication reply to mobile station 12. A mobile internet protocol (MIP) registration request is generated by mobile station 12 to PDSN cluster 18a at step 'e'. At step 'f', the authentication request is generated by PDSN cluster 18a and communicated to home AAA 60. At step 'g', home AAA 60 responds with an authentication reply to PDSN cluster 18a. At step 'h', PDSN cluster 18a generates an MIP registration request to home agent 70. At step 'i', home agent 70 communicates a DHCP request to DHCP server 50. At step 'j', a DNS update/add signal is provided at DHCP server 50 to DNS database element 54.

DNS database element 54 responds to this signal by generating a DNS update reply to DHCP server 50 at step 'k'. DHCP server 50 then generates a DHCP acknowledge signal to be communicated to home agent 70 at step '1'. At step 'm', home agent 70 generates an MIP registration reply to PDSN cluster 18a. At step 'n', PDSN cluster 18a forwards the registration reply to mobile station 12. At step 'o', end-to-end packet transport is achieved between mobile station 12 and home agent 70. This allows an accurate IP address or other associated information to be ascertained in order to push data to an end user of mobile station 12 in accordance with the teachings of the present invention.

In a particular embodiment of the present invention, home AAA server 60 in the corresponding enterprise network may operate to authenticate the end user during a PPP establishment associated with mobile station 12 (this may be illustrated between steps 'h' and 'i' as described above). The IP address is assigned by home agent 70 and DHCP server 50 during mobile IP registration. DHCP server 50 may update DNS database element 54 before returning the IP address and other provision parameters to an end user of mobile station 12. A mobile IP tunnel is also established between PDSN cluster 18a and home agent 70 in the enterprise network to enable secure end-to-end packet transport.

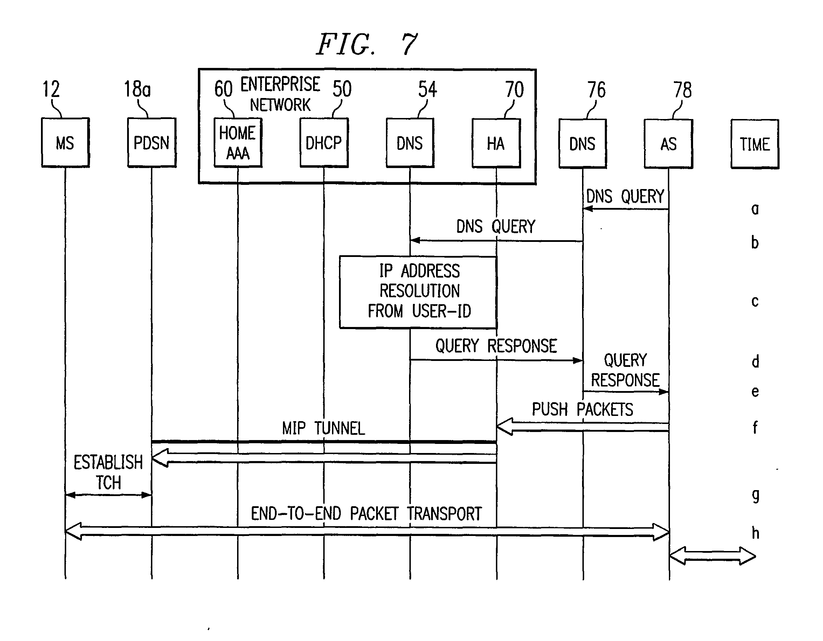

FIGURE 7 is a flow diagram illustrating an embodiment providing mobile IP services to an end user of mobile station 12. In this scenario, application server 78 pushes data to mobile station 12. In this case, the end user has a dynamically assigned address (private or routable). A DNS query from application 78 is routed to DNS database element 54 in the corresponding enterprise domain. DNS database element 54, in conjunction with network registrar 56, performs a search in order to retrieve the entry corresponding to the target mobile user of mobile station 12 identified by its corresponding NAI. Resolution of the NAI to the corresponding assigned IP address is also provided in accordance with the teachings of the present invention. Based on the returned IP address, application server 78 pushes data to a serving PDSN element via a mobile IP tunnel at home agent 70. The serving PDSN may initiate procedures to establish a radio traffic channel, if required, and may deliver the push data to mobile station 12.

Application server 78 issues a DNS query to local DNS database 76 at step 'a'. Local DNS database 76 then forwards this DNS query to DNS database element 54 in step 'b'. At step 'c', the IP address is resolved from the user ID between DHCP server 50 and home agent 70. At step 'd', DNS database element 54 issues a query response signal to local DNS database 76, which is forwarded on to application server 78 as illustrated in step 'e'. At step 'f', application server 78 begins to push packets to home agent 70. A MIP tunnel is then established between home agent 70 and PDSN cluster 18a.

At step 'g', an established traffic channel (as explained above) is provided between mobile station 12 and PDSN cluster 18a. Finally, at step 'h', end-to-end packet transport communications is provided between mobile station 12 and application server 78 such that data may be pushed in accordance with the teachings of the present invention.

Communication system 10 may be used in a host of communications environments, such as in conjunction with a code division multiple access (CDMA) protocol, for example. In a CDMA environment all users of the CDMA system use the same carrier frequency and may transmit simultaneously. Each user has his own pseudo-random code word. Whenever an end user of mobile station 12 that is using CDMA wishes to transmit, an associated system may correlate a message signal with the code word. The receiver performs decorrelation on the received signal. For detection of the message signal, the receiver identifies the code word used by the transmitter. Because many users of the CDMA system share the same frequency, CDMA systems could benefit from the teachings of the present invention in providing an efficient routing and processing protocol for information packets to be pushed to mobile station 12. Also, IS-95 may utilize the CDMA scheme in conjunction with the present invention.

Time division multiple access (TDMA) represents another protocol in which the disclosed configuration of communication system 10 may be implemented. In a TDMA access scheme, a set of end users or multiple mobile stations 12 are multiplexed over the time domain, i.e. user U1 uses radio frequency F1 for time period T1 after which user U2 uses the same frequency F1 for time T1 and so on. The time axis is divided into equal length time slots. In TDMA, each user occupies a cyclically repeating time slot defining a channel with N time slots making up a frame. In using TDMA it is possible to allocate different numbers of time slots per frame to different end users. Thus bandwidth can be supplied on demand to different users depending on user needs. GSM and the IS-54/IS-136-based United States Digital Cellular (USDC) system are some of the standards that may use TDMA in conjunction with the present invention. The pushing of data approach for information propagating through communication system 10 may be implemented in a TDMA system in order to eliminate unnecessary signaling and redundant tunneling where appropriate.

Frequency division multiple access (FDMA) represents another communications environment in which communication system 10 may be employed. The FDMA system assigns individual frequency channels or bands to individual users wherein all users may transmit at the same time. These channels are assigned on demand to users requesting service. During the call no other user can share the same frequency band. An FDMA channel carries only one communications exchange or session, e.g. phone call, at a time. One or more mobile stations 12, which may be used in conjunction with an FDMA system, may implement duplexers because both the transmitter and receiver operate at the same time. The Advanced Mobile Phone Service (AMPS) and the European Total Access Communication System (ETACS) are some of the standards that may use FDMA in conjunction with the processing approach of the present invention.

Although the present invention has been described in detail with reference to particular embodiments, it should be understood that various other changes, substitutions, and alterations may be made hereto without departing from the scope of the present invention. For example, although the present invention has been described as operating in PDSN or GGSN environments, the present invention may be used in any networking environment that routes or processes information that is pushed to an end user of mobile station 12. The processing protocol disclosed in the preceding figures is generally applicable to all communication systems in which information packets are routed between or through IP networks.

Additionally, although the present invention has been described with reference to communications between mobile station 12 and IP networks 16a and 16b, the data pushing protocol described herein may be implemented for communications between any two components within or external to a mobile network. The present invention has merely described mobile station 12 and IP networks 16a and 16b for purposes of teaching and should not be construed to limit how or where the.data pushing protocol of the present invention is implemented. Moreover, the processing and routing configurations disclosed above may be implemented in conjunction with any component, unit, hardware, software, object, or element involved in the communications process.

## Claims

1. A method in an internet protocol, IP, network environment, comprising:
assigning a network identifier to an end user of a mobile station (12), the network identifier comprising a domain name of a home domain (34, 36) for the mobile station;
determining a relationship between the network identifier and an IP address element;
storing the relationship in a database (54) in the home domain;
receiving a query for the network identifier for the end user; and
in response to the query, providing the IP address element such that a querying entity may push data to the mobile station.

2. The method of Claim 1, further comprising updating the IP address element in the database in response to one or more triggering events.

3. The method of Claim 1, further comprising storing accounting, billing, and priority parameters associated with the end user with the relationship in the database.

4. The method of Claim 3, further comprising receiving a query for one or more of the parameters and responding to the query by providing the selected one or more parameters to the querying entity.

5. The method of Claim 1, wherein the data that is pushed to the mobile station is associated with a selected one of a mobile IP-based service and a simple IP-based service, and wherein the data is pushed by an application server (78).

6. The method of Claim 1, further comprising establishing a secure tunneling for the data that is pushed to the end user of the mobile station with a layer two tunneling protocol network server (64) positioned in a home network associated with the end user.

7. The method of Claim 1, further comprising providing an authentication, authorization, and accounting server (60, 68) operable to authenticate the end user of the mobile station and to provide tunneling parameters to a packet data serving node (20a, 20b, 20c, 20d) that communicates that data to the mobile station.

8. The method of Claim 1, further comprising providing an authentication, authorization, and accounting server (60, 68) operable to authenticate the end user of the mobile station and to provide tunneling parameters to a gateway general packet radio service support node.

9. A method for pushing data in an Internet Protocol, IP, network environment, comprising:
identifying a home domain (34, 36) for a mobile station (12) from a network identifier assigned to an end user of the mobile station;
querying a database (54) in the identified home domain for the network identifier, the network identifier being associated in the database with an IP address element of the end user of the mobile station;
receiving the IP address element from the database; and
pushing data associated with the IP address element to the end user of the mobile station.

10. A method according to claim 9, further comprising querying a local database (76) for the network identifier, the local database performing the identifying, querying and receiving steps in response to the query.

11. The method of Claim 10, further comprising receiving information associated with one or more parameters of the end user in response to the query that is sent to the database.

12. The method of Claim 9, wherein pushing data to the end user comprises providing simple IP-based services to the mobile station.

13. The method of Claim 9, wherein pushing data to the end user comprises providing mobile IP-based services to the mobile station.

14. The method of Claim 9, wherein pushing data to the end user comprises providing wireless application protocol services to the mobile station.

15. The method of Claim 9, further comprising establishing a secure tunneling for the data that is pushed to the end user of the mobile station with a layer two tunneling protocol network server (64) positioned in a home network associated with the end user.

16. A system in an Internet Protocol, IP, network environment, comprising:
means for assigning a network identifier to an end user of a mobile station (12), the network identifier comprising a domain name of a home domain (34, 36) for the mobile station;
means for determining a relationship.between the network identifier and an IP address element;
means for storing the relationship in a database (54) in the home domain;
means for receiving a query for the network identifier for the end user; and
in response to the query, means for providing the IP address element such that a querying entity may push data to the mobile station.

17. The system of claim 16, further comprising means for performing a method as claimed in any of claims 2 to 8.

18. A system for pushing data in an Internet Protocol, IP, network environment, comprising:
means for identifying a home domain (34, 36) for a mobile station (12) from a network identifier assigned to an end user of the mobile station;
means for querying a database (54) in the identified home domain for the network identifier, the network identifier being associated in the database with an IP address element of the end user of the mobile station;
means for receiving the IP address element from the database; and
means for pushing data associated with the IP address element to the end user of the mobile station.

19. The system of claim 18, further comprising means for performing a method as claimed in any of claims 10 to 15.

20. A computer program or computer program product comprising software code adapted, when executed on a data processing apparatus, to perform a method as claimed in any of claims 1 to 8.

21. A computer program or computer program product comprising software code adapted, when executed on a data processing apparatus, to perform a method as claimed in any of claims 9 to 15.

## Patentansprüche

1. Verfahren in einer Internet Protocol, IP, Netzwerkumgebung, das umfasst:
Zuordnen eines Netzwerk-Identifizierers zu einem Endbenutzer einer mobilen Station (12), wobei der Netzwerk-Identifizierer einen Domainnamen einer Heimatdomain (34, 36) für die mobile Station aufweist;
Bestimmen der Beziehung zwischen dem Netzwerk-Identifizierer und einem IP-Adresselement;
Speichern der Beziehung in einer Datenbank (54) in der Heimatdomain;
Empfangen einer Anfrage nach dem Netzwerk-Identifizierer für den Endbenutzer; und
im Ansprechen auf die Anfrage, Bereitstellen des IP-Adresselements so, dass eine Anfrageeinheit Daten an die mobile Station weiterleiten kann.

2. Verfahren nach Anspruch 1, das des Weiteren das Aktualisieren des IP-Adresselements in der Datenbank im Ansprechen auf einen oder mehrere Triggerereignisse umfasst.

3. Verfahren nach Anspruch 1, das des Weiteren das Speichern von Buchhaltungs-, Rechnungslegungs- und Prioritätsparametern, die mit dem Endbenutzer assoziiert sind, mit der Beziehung in der Datenbank umfasst.

4. Verfahren nach Anspruch 3, das des Weiteren das Empfangen einer Anfrage nach einem oder mehreren der Parameter und das Ansprechen auf die Anfrage durch Bereitstellen des ausgewählten einen oder der ausgewählten mehreren Parameter für die Anfrageeinheit umfasst.

5. Verfahren nach Anspruch 1, wobei die Daten, die an die mobile Station weitergeleitet werden, mit einem ausgewählten eines mobilen IP-basierten Dienstes und eines einfachen IP-basierten Dienstes assoziiert sind, und wobei die Daten von einem Anwendungsserver (78) weitergeleitet werden.

6. Verfahren nach Anspruch 1, das des Weiteren das Herstellen eines sicheren Tunnelns für die Daten, die an den Endbenutzer der mobilen Station weitergeleitet werden, mit einem Layer 2 Tunneling Protocol (Schicht 2 Tunnel Protokoll) Netzwerkserver (64) umfasst, der in einem Heimnetzwerk positioniert ist, das mit dem Endbenutzer assoziiert ist.

7. Verfahren nach Anspruch 1, das des Weiteren das Bereitstellen eines Authentisierungs-, Autorisierungs- und Buchhaltungs-Servers (60, 68) umfasst, der so betreibbar ist, dass er den Endbenutzer der mobilen Station authentisiert und Tunnelparameter für einen Paketdaten-Dienstknoten (20a, 20b, 20c, 20d) bereitstellt, der die Daten an die mobile Station kommuniziert.

8. Verfahren nach Anspruch 1, das des Weiteren das Bereitstellen eines Authentisierungs-, Autorisierungs- und Buchhaltungs-Servers (60, 68) umfasst, der so betreibbar ist, dass er den Endbenutzer der mobilen Station authentisiert und Tunnelparameter für einen Gateway General Packet Radio Service Support Node (allgemeiner paketorientierter Funkdienst-Unterstützungsknoten) bereitstellt.

9. Verfahren zum Weiterleiten von Daten in einer Internet Protocol, IP, Netzwerkumgebung, das umfasst:
Identifizieren einer Heimatdomain (34, 36) für eine mobile Station (12) von einem Netzwerk-Identifizierer, der einem Endbenutzer der mobilen Station zugeordnet ist;
Anfragen einer Datenbank (54) in der identifizierten Heimatdomain nach dem Netzwerk-Identifizierer, wobei der Netzwerk-Identifizierer in der Datenbank mit einem IP-Adresselement des Endbenutzers der mobilen Station assoziiert ist;
Empfangen des IP-Adresselements von der Datenbank; und
Weiterleiten von Daten, die mit dem IP-Adresselement assoziiert sind, an den Endbenutzer der mobilen Station.

10. Verfahren nach Anspruch 9, das des Weiteren das Anfragen einer lokalen Datenbank (76) nach dem Netzwerk-Identifizierer umfasst, wobei die lokale Datenbank die Schritte des Identifizierens, Anfragens und Empfangens im Ansprechen auf die Anfrage durchführt.

11. Verfahren nach Anspruch 10, das des Weiteren das Empfangen von Informationen umfasst, die mit einem oder mehreren Parametern des Endbenutzers assoziiert sind, im Ansprechen auf die Anfrage, die an die Datenbank gesendet wird.

12. Verfahren nach Anspruch 9, wobei das Weiterleiten der Daten an den Endbenutzer das Bereitstellen einfacher IP-basierter Dienste für die mobile Station umfasst.

13. Verfahren nach Anspruch 9, wobei das Weiterleiten der Daten an den Endbenutzer das Bereitstellen mobiler IP-basierter Dienste für die mobile Station umfasst.

14. Verfahren nach Anspruch 9, wobei das Weiterleiten der Daten an den Endbenutzer das Bereitstellen von Wireless Application Protocol (drahtloses Anwendungsprotokoll) -Diensten für die mobile Station umfasst.

15. Verfahren nach Anspruch 9, das des Weiteren das Herstellen eines sicheren Tunnelns für die Daten, die an den Endbenutzer der mobilen Station weitergeleitet werden, mit einem Layer 2 Tunneling Protocol (Schicht 2 Tunnel Protokoll) Netzwerkserver (64) umfasst, der in einem Heimnetzwerk positioniert ist, das mit dem Endbenutzer assoziiert ist.

16. System in einer Internet Protocol, IP, Netzwerkumgebung, das aufweist:
eine Einrichtung zum Zuordnen eines Netzwerk-Identifizierers zu einem Endbenutzer einer mobilen Station (12), wobei der Netzwerk-Identifizierer einen Domainnamen einer Heimatdomain (34, 36) für die mobile Station aufweist;
eine Einrichtung zum Bestimmen der Beziehung zwischen dem Netzwerk-Identifizierer und einem IP-Aäresselement;
eine Einrichtung zum Speichern der Beziehung in einer Datenbank (54) in der Heimatdomain;
eine Einrichtung zum Empfangen einer Anfrage nach dem Netzwerk-Identifizierer für den Endbenutzer; und
im Ansprechen auf die Anfrage, eine Einrichtung zum Bereitstellen des IP-Adresselements so, dass eine Anfrageeinheit Daten an die mobile Station weiterleiten kann.

17. System nach Anspruch 16, das des Weiteren eine Einrichtung zum Durchführen eines Verfahrens nach einem der Ansprüche 2 bis 8 aufweist.

18. System zum Weiterleiten von Daten in einer Internet Protocol, IP, Netzwerkumgebung, das aufweist:
eine Einrichtung zum Identifizieren einer Heimatdomain (34, 36) für eine mobile Station (12) von einem Netzwerk-Identifizierer, der einem Endbenutzer der mobilen Station zugeordnet ist;
eine Einrichtung zum Anfragen einer Datenbank (54) in der identifizierten Heimatdomain nach dem Netzwerk-Identifizierer, wobei der Netzwerk-Identifizierer in der Datenbank mit einem IP-Adresselement des Endbenutzers der mobilen Station assoziiert ist;
eine Einrichtung zum Empfangen des IP-Adresselements von der Datenbank; und
eine Einrichtung zum Weiterleiten von Daten, die mit dem IP-Adresselement assoziiert sind, an den Endbenutzer der mobilen Station.

19. System nach Anspruch 18, das des Weiteren eine Einrichtung zum Durchführen eines Verfahrens nach einem der Ansprüche 10 bis 15 aufweist.

20. Computerprogramm oder Computerprogrammerzeugnis, das einen Softwarecode enthält, der so ausgelegt ist, dass er, wenn er auf einer Datenverarbeitungsvorrichtung ausgeführt wird, ein Verfahren nach einem der Ansprüche 1 bis 8 durchführt.

21. Computerprogramm oder Computerprogrammerzeugnis, das einen Softwarecode enthält, der so ausgelegt ist, dass er, wenn er auf einer Datenverarbeitungsvorrichtung ausgeführt wird, ein Verfahren nach einem der Ansprüche 9 bis 15 durchführt.

## Revendications

1. Procédé dans un environnement de réseau de protocole Internet, IP, comprenant:
l'attribution d'un identificateur de réseau à un utilisateur final d'une station mobile (12), l'identificateur de réseau comprenant un nom de domaine d'un domaine de rattachement (34, 36) pour la station mobile ;
la détermination d'une relation entre l'identificateur de réseau et un élément d'adresse IP ;
le stockage de la relation dans une base de données (54) dans le domaine de rattachement ;
la réception d'une requête pour l'identificateur de réseau pour l'utilisateur final ; et
en réponse à la requête, la fourniture de l'élément d'adresse IP de sorte qu'une entité effectuant la requête puisse pousser des données vers la station mobile.

2. Procédé selon la revendication 1, comprenant en outre la mise à jour de l'élément d'adresse IP dans la base de données en réponse à un ou plusieurs événements déclencheurs.

3. Procédé selon la revendication 1, comprenant en outre le stockage de paramètres de comptabilité, de facturation et de priorité associés à l'utilisateur final avec la relation dans la base de données.

4. Procédé selon la revendication 3, comprenant en outre la réception d'une requête pour un ou plusieurs des paramètres et la réponse à la requête en fournissant les un ou plusieurs paramètres sélectionnés à l'entité effectuant la requête.

5. Procédé selon la revendication 1, dans lequel les données qui sont poussées vers la station mobile sont associées à un service sélectionné d'un service basé sur IP mobile et d'un service basé sur IP simple, et dans lequel les données sont poussées par un serveur d'application (78).

6. Procédé selon la revendication 1, comprenant en outre l'établissement d'une tunnellisation sécurisée pour les données qui sont poussées vers l'utilisateur final de la station mobile avec un serveur de réseau de protocole de tunnellisation de couche deux (64) positionné dans un réseau de rattachement associé à l'utilisateur final.

7. Procédé selon la revendication 1, comprenant en outre la fourniture d'un serveur d'authentification, d'autorisation et de comptabilité (60, 68) exploitable pour authentifier l'utilisateur final de la station mobile et pour fournir des paramètres de tunnellisation à un noeud serveur de données par paquets (20a, 20b, 20c, 20d) qui communique ces données à la station mobile.

8. Procédé selon la revendication 1, comprenant en outre la fourniture d'un serveur d'authentification, d'autorisation et de comptabilité (60, 68) exploitable pour authentifier l'utilisateur final de la station mobile et pour fournir des paramètres de tunnellisation à un noeud de support de service général de radiocommunication par paquets de transit.

9. Procédé pour pousser des données dans un environnement de réseau de protocole Internet, IP, comprenant :
l'identification d'un domaine de rattachement (34, 36) pour une station mobile (12) à partir d'un identificateur de réseau attribué à un utilisateur final de la station mobile ;
l'interrogation d'une base de données (54) dans le domaine de rattachement identifié pour l'identificateur de réseau, l'identificateur de réseau étant associé dans la base de données à un élément d'adresse IP de l'utilisateur final de la station mobile ;
la réception de l'élément d'adresse IP en provenance de la base de données ; et
le fait de pousser des données associées à l'élément d'adresse IP vers l'utilisateur final de la station mobile.

10. Procédé selon la revendication 9, comprenant en outre l'interrogation d'une base de données locale (76) pour l'identificateur de réseau, la base de données locale effectuant les étapes d'identification, d'interrogation et de réception en réponse à l'interrogation.

11. Procédé selon la revendication 10, comprenant en outre la réception d'informations associées à un ou plusieurs paramètres de l'utilisateur final en réponse à l'interrogation qui est envoyée à la base de données.

12. Procédé selon la revendication 9, dans lequel le fait de pousser des données vers l'utilisateur final comprend la fourniture de services basés sur IP simples à la station mobile.

13. Procédé selon la revendication 9, dans lequel le fait de pousser des données vers l'utilisateur final comprend la fourniture de services basés sur IP mobiles à la station mobile.

14. Procédé selon la revendication 9, dans lequel le fait de pousser des données vers l'utilisateur final comprend la fourniture de services de protocole d'application sans fil à la station mobile.

15. Procédé selon la revendication 9, comprenant en outre l'établissement d'une tunnellisation sécurisée pour les données qui sont poussées vers l'utilisateur final de la station mobile avec un serveur de réseau de protocole de tunnellisation de couche deux (64) positionné dans un réseau de rattachement associé à l'utilisateur final.

16. Système dans un environnement de réseau de protocole Internet, IP, comprenant:
des moyens pour attribuer un identificateur de réseau à un utilisateur final d'une station mobile (12), l'identificateur de réseau comprenant un nom de domaine d'un domaine de rattachement (34, 36) pour la station mobile ;
des moyens pour déterminer une relation entre l'identificateur de réseau et un élément d'adresse IP ;
des moyens pour stocker la relation dans une base de données (54) dans le domaine de rattachement ;
des moyens pour recevoir une requête pour l'identificateur de réseau pour l'utilisateur final ; et
en réponse à la requête, des moyens pour fournir l'élément d'adresse IP de sorte qu'une entité effectuant la requête puisse pousser des données vers la station mobile.

17. Système selon la revendication 16, comprenant en outre des moyens pour effectuer un procédé tel que revendiqué dans l'une quelconque des revendications 2 à 8.

18. Système pour pousser des données dans un environnement de réseau de protocole Internet, IP, comprenant :
des moyens pour identifier un domaine de rattachement (34, 36) pour une station mobile (12) à partir d'un identificateur de réseau attribué à un utilisateur final de la station mobile ;
des moyens pour interroger une base de données (54) dans le domaine de rattachement identifié pour l'identificateur de réseau, l'identificateur de réseau étant associé dans la base de données à un élément d'adresse IP de l'utilisateur final de la station mobile ;
des moyens pour recevoir l'élément d'adresse IP en provenance de la base de données ; et
des moyens pour pousser des données associées à l'élément d'adresse IP vers l'utilisateur final de la station mobile.

19. Système selon la revendication 18, comprenant en outre des moyens pour effectuer un procédé tel que revendiqué dans l'une quelconque des revendications 10 à 15.

20. Programme informatique ou produit de programme informatique comprenant un code logiciel adapté, lorsqu'il est exécuté sur un appareil de traitement de données, pour effectuer un procédé tel que revendiqué dans l'une quelconque des revendications 1 à 8.

21. Programme informatique ou produit de programme informatique comprenant un code logiciel adapté, lorsqu'il est exécuté sur un appareil de traitement de données, pour effectuer un procédé tel que revendiqué dans l'une quelconque des revendications 9 à 15.
